# EUROPEAN PATENT APPLICATION

(11) **EP 1 870 746 A1**
(43) Date of publication of application: **26.12.2007**
(21) Application number: 07012204.9
(22) Date of filing: 21.06.2007
(51) Int. Cl.: G02B 6/02, G02B 6/44

(54) **HPCF type flame retardant heat resistant fiber core wire and optical fiber cord using the same**

(30) Priority: 21.06.2006 JP 2006171154
(71) Applicant: YAZAKI CORPORATION, Minato-ku Tokyo 108-8333 (JP)
(72) Inventor: Kudou, Takamichi, Gotemba-shi Shizuoka (JP); Izaki, Masahiro, Kawasaki-shi Kanagawa 211-8585 (JP); Hirota, Masaaki, Kawasaki-shi Kanagawa 211-8585 (JP)
(74) Representative: Grünecker, Kinkeldey, Stockmair & Schwanhäusser Anwaltssozietät

(57) **Abstract**

By a core wire structure wherein a first coating layer of a flame retardant nylon-12 resin is provided on an HPCF strand obtained by providing a clad of a hard fluorine-based resin on a core of silica glass, it is possible to impart adhesiveness (adhesion property of 100 to 400 g/mm), flame retardancy, and a property of being welded to a plastic ferrule by laser irradiation. Also, by employing an optical fiber cord structure wherein a second coating layer of a flame retardant polypropylene-based elastomer is provided on the core wire, it is possible to impart a hardness of 55 or more, heat resistance, flame retardancy, and adhesiveness (adhesion property of 100 to 300 g/mm).

## Description

### BACKGRUOND OF THE INVENTION

### 1. Field of the Invention

This invention relates to an HPCF (hard plastic clad optical fiber) type flame retardant heat resistant optical fiber core wire suitable primarily for applications such as mobile communications for vehicles, trains, and the like and applications such as communications under a severe use environment such as high temperature and low temperature environments or applications that requires on-site processing for mounting connectors as well as to an optical fiber cord using the same.

### 2. Description of the related art

In recent years, plastic optical fibers (POFs) have been used for applications such as short and medium range communications particularly because there is an increase in demand for high speed data transmission raised due to an increase in communication information amount caused by multimedia information treated in the field of vehicle communications such as navigation systems and audio systems as well as because there are demands for a reduction in weight of wire harness cables, cost cutting, and establishment of communication system (see JP-A-2005-84096, for example).

Demands for a further increase in communication information amount and more speedy data transmission will inevitably rise in the vehicle communication field in near future, and it is considered that the communication system using the POF will reach its limit.

Accordingly, a communication system using an HPCF (hard plastic clad optical fiber) wherein silica glass is used for an optical fiber core is being developed for use in the vehicle communication field since the communication system using HPCF has a large bandwidth and low losses.

When the HPCF type optical fiber cord is used for the mobile communications, various characteristics are required.

As environment characteristics in the case of use for vehicles, for example, high heat resistance and temperature dimensional stability sufficient for enduring seasonal temperature changes and wiring around an engine and inside a roof are required.

Also, as mechanical characteristics, since stresses such as bending, pulling, and twisting are frequently imparted on movable wiring in a complex manner, resistances to such stresses are required.

Also, chemical resistance and flame retardancy are required since the HPCF type optical fiber cord is used under a severe environment where there are flammable substances such as oils including an engine oil, a brake oil; a hydraulic oil, and the like as well as a gasoline, a battery electrolysis liquid, and the like.

Further, in addition to the use for mobile communications, there has been an increase in demand for optical fiber wiring under severe environments such as in a plant and between FA (factory automation) apparatuses due to recent dissemination of high speed network.

As a drawback of the fiber using silica glass, it is necessary to attach a ferrule at a tip of the fiber when the fiber is to be attached to an optical connector. In the case of fixing either one of an optical fiber wire, a first coating, and a second coating, swelling and shrinking occur mainly due to temperature changes and the like to result in displacement among the optical fiber wire, the first coating, and the second coating, which is called pistonning, and the pistonning can cause a loss shift and breakage of an optical device to be mounted in the vicinity of the fiber tip.

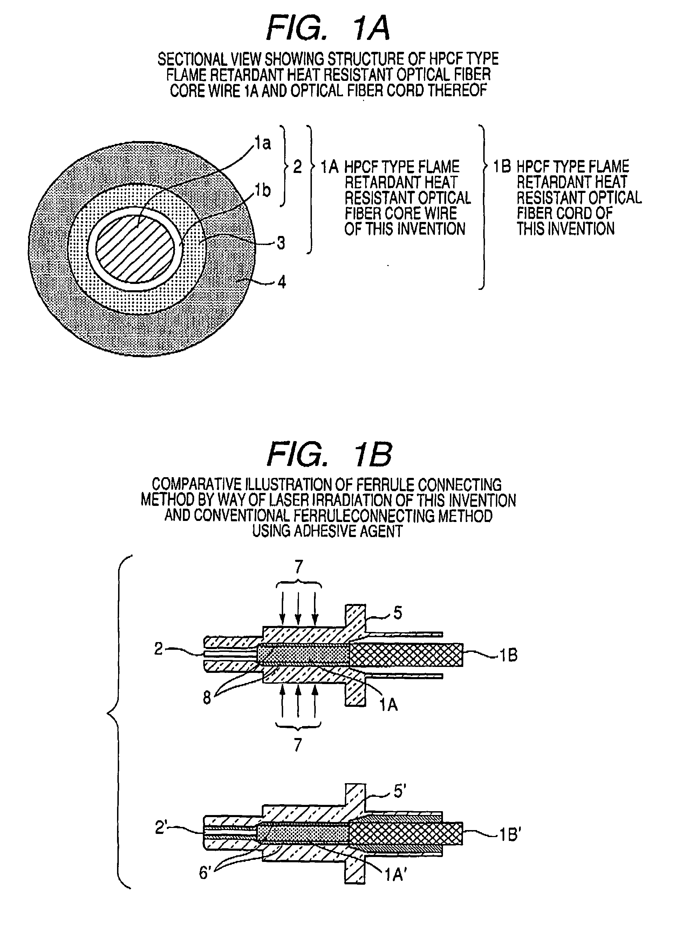

Accordingly, an adhesive agent is used for fixing all of the optical fiber wire, the first coating, and the second coating in the ferrule as shown in Fig. 1B, but the use of adhesive agent causes problems of poor productivity and poor processability in installation sites.

### SUMMARY OF THE INVENTION

An object of this invention is to provide an HPCF type flame retardant heat resistant optical fiber core wire/cord having characteristics more excellent than a POF core wire/cable due to an appropriate degree of adhesion property (100 to 400 g/mm) imparted between an HPCF wire clad and a flame retardant nylon-12 resin which is a first coating material and an adhesion property (100 to 300 g/mm) imparted between the flame retardant nylon-12 resin and a flame retardant polypropylene-based elastomer, the core wire/cord being excellent in flame retardancy, heat resistance, and high temperature dimensional stability and being easily processed when processing a terminal to which an optical connector or the like is to be attached.

As a result of extensive researches for solving the problems, this invention enables to impart an appropriate adhesion property (100 to 400 g/mm) by melting a nylon-12 resin containing a flame retarder and coating the nylon-12 resin on an outer periphery of a clad by extrusion molding as well as to suppress retraction and protrusion of an optical fiber from the coating layer by environmental temperature changes, which are called pistonning.

More specifically, by forming a core wire structure wherein an HPCF strand obtainable by forming a clad of a hardened fluorine-base resin on a silica glass core is provided with a first coating layer of a flame retardant nylon-12 resin containing 0.1 wt% or more of carbon black, 5 to 20 wt% (preferably about 15 wt% or less) of a triadine-based flame retardant, and 1 to 20 wt% or an adhesive resin, it is possible to achieve adhesiveness (adhesion property of 100 to 400 g/mm), flame retardancy, and a property of being welded to a plastic ferrule by laser irradiation.

Also, since an appropriate amount of the carbon black is added to the flame retardant nylon resin, the flame retardant nylon resin becomes black to make it possible to be welded to the ferrule by laser light without using any adhesive agents, thereby making the terminal processing easy.

The optical fiber core wire enables the laser welding with highly accurate positioning of a controlled outer diameter tolerance of ±40 µm.

Also, in an HPCF type flame retardant heat resistant fiber cord wherein a flame retardant polypropylene-based elastomer is coated as a second coating material on the outer periphery of the core wire, an adhesion property between the flame retardant nylon-12 resin of the optical fiber core wire and the flame retardant polypropylene-based elastomer is controlled to 100 to 300 g/mm (preferably 150 to 250 g/mm) to improve handling easiness of the optical cord during the terminal processing.

More specifically, by establishing a structure of the HPCF type flame retardant heat resistant fiber cord wherein the second coating layer of the flame retardant polypropylene-based elastomer containing 30 to 50 wt% of a flame retarder and 1 to 10 wt% of an adhesive resin is formed on the core wire, it is possible to achieve a hardness of 55 or more, flame retardancy, an adhesiveness (adhesion property of 100 to 300 g/mm).

Further, by maintaining a material hardness of the flame retardant polypropylene-based elastomer to 55 or more (Dulometer: D scale) to make the elastomer to be rigid, it is possible to connect the ferrule not only by the adhesive agent method in the terminal processing, but also by mechanical processing methods such as screwing and extrusion, thereby making it possible to simultaneously improve mechanical characteristics.

Also, by using the flame retardant polypropylene-based elastomer as the second coating material, it is possible to achieve good flame retardancy, heat resistance, and chemical resistance.

With the use of the HPCF type flame retardant heat resistant fiber cord of this invention, it is possible to achieve an excellent effect of providing an HPCF type optical fiber cord having good environment characteristics, good mechanical characteristics, low losses, and large bandwidth that are better than those of POF core wire/cables, and an industrial value of the effect is considered to be great.

### BRIEF DESCRIPTION OF THE DRAMNGS

Fig. 1A is a sectional view showing a structure of an HPCF type flame retardant heat resistant fiber core wire 1A and an optical fiber cord 1 B using the same of this invention, and Fig. 1 B is an illustration of a ferrule connection method by way of laser irradiation of this invention and a conventional ferrule connecting method by using an adhesive agent.

### DESCRIPTION OF THE PREFEERED EMBODIMENTS

Hereinafter, Examples of the HPCF type flame retardant heat resistant optical fiber cord 1 of this invention will be described in detail with reference to the accompanying drawing.

As shown in Fig. 1A, this invention provides an HPCF type flame retardant heat resistant optical fiber cord 1B wherein: a core 1 a that is made from silica glass and disposed at a central part is provided with an HPCF strand 2 coated with a clad 1 b of a hardened fluorine-based resin; an optical fiber core wire 1A coated with a first coating layer 3 of a flame retardant nylon-12 resin is formed around an outer periphery of the core 1 a; and a second coating layer 4 of a flame retardant polypropylene-based elastomer is provided around an outer periphery of the optical fiber core wire 1A. As a method for imparting the flame retardancy to the core wire and the cord of this invention, a method of adding a flame retarder to the nylon-12 resin or the polypropylene-based elastomer may be employed. In order to realize desired flame retardancy, a flame retarder auxiliary agent may also be added. Examples of the flame retarder include a bromine-based flame retarder, a metal hydroxide, a phosphorus-based flame retarder, a nitrogen-based flame retarder, and the like, and the flame retarder may be added in an appropriate amount in accordance with the desired flame retardancy.

More specifically, examples of the bromine-based flame retarder include tetrabromobisphenol A, bistetrabromophthalimide ethane, polystyrene bromide, polydibromo propylether, decabromodiphenylethane, and the like; examples of the metal hydroxide include magnesium hydroxide and aluminum hydroxide; examples of the phosphorus-based flame retarder include aromatic ester phosphate, aromatic condensed ester phosphate, halogenated ester phosphate, red phosphorus, and the like; and examples of the nitrogen-based flame retarder include triadine-based, guanidine-based, guanylurea-based, and melamine-based nitrogen-based flame retardants, and the like.

It is possible to add one or more of the above-listed flame retarders to the second coating material of this invention, and an amount of the flame retarder to be added may preferably be 30 to 50 wt% since such amount is effective for improving the flame retardancy without influencing on physical properties of the coating materials.

Also, as the adhesive resin, polyamide, polyester, ethylene-vinyl acetate copolymer (EVA), polyethylene, polypropylene, and the like are usable. In this invention, an adhesion property between the HPCF strand and the nylon-12 is controlled by adding the adhesive polyamide which is considered to be most effective to the first coating material as well as by adding the adhesive polypropylene to the second coating material.

Hereinafter, specific examples will be described.

### [Example 1]

By using silica glass as the core material and a UV curing resin as the clad material, melt-drawing was performed to obtain an HPCF strand having a core diameter of 200 µm and a clad thickness of 15 µm. By using an extrusion coating apparatus, a nylon-12 resin (hereinafter referred to as nylon-12 (a)) not containing any flame retarder nor adhesive resin was coated on the HPCF strand to form a first coating layer having a thickness of 335 µm, thereby obtaining an HPCF core wire having an outer diameter of 0.9 mm. Further, by using the same extrusion coating apparatus, a flame retardant polypropylene-based elastomer resin (hereinafter referred to as PP elastomer (1)) was coated on the HPCF core wire to form a second coating layer having a thickness of 650 µm, thereby obtaining an HPCF type flame retardant heat resistant fiber cord having an outer diameter of 2.2 mm. A structure of the thus-obtained optical fiber cord is shown in Fig. 1 and Table 1, and results of evaluation of various characteristics are shown in Table 2.

### [Example 2]

An HPCF type optical fiber cord was obtained in the same manner as in Example 1 except for using a flame retardant nylon-12 resin (hereinafter referred to as nylon-12 (b)) containing about 15 wt% of a flame retarder (triadine-based compound) and about 10 wt% of an adhesive resin as the first coating material. Various characteristics of the thus-obtained HPCF type flame retardant fiber cord were evaluated, and results of the evaluation are shown in Table 2.

### [Example 3]

An HPCF type optical fiber cord was obtained in the same manner as in Example 1 except for using a flame retardant nylon-12 resin (hereinafter referred to as nylon-12 (b)) containing about 15 wt% of a flame retarder (triadine-based compound) and about 10 wt% of an adhesive resin as the first coating material as well as for using a polypropylene-based elastomer resin (hereinafter referred to as PP elastomer (2)) reduced in amount of the flame retarder and not containing any adhesive resin as the second coating material. Various characteristics of the thus-obtained HPCF type flame retardant fiber cord were evaluated, and results of the evaluation are shown in Table 2.

Next, Comparative Example 1 was prepared for the purpose of reference. In Comparative Example 1, an HPCF type optical fiber cord was obtained in the same manner as in Example 1 except for using a polyvinyl chloride resin (hereinafter referred to as PVC) as the first coating material. Various characteristics of the thus-obtained HPCF type flame retardant fiber cord were evaluated, and results of the evaluation are shown in Table 2.

**[Table 1] Structure of HPCF Type Flame Retardant Heat Resistant Optical Fiber Cord 1 B**

| Item | Specification |
|---|---|
| Core diameter (µm) | 200±4 |
| Clad diameter (µm) | 225±5 |
| First coating (mm) | 0.90±0.04 |
| Second coating (mm) | 2.20±0.07 |

Comparison among the Examples of the HPCF type flame retardant heat resistant optical fiber cord 1 of this invention is shown in Table 2.

**[Table 2]**

| Comparison among Examples of HPCF Flame Retardant Heat Resistant Optical Fiber Cord 1 of This Invention | | | | | | | | | | |
|---|---|---|---|---|---|---|---|---|---|---|
| | First coating material | Second coating material | Adhesion property 1 and pistonning* | Adhesion property 2 and pistonning** | Flame retardancy | Heat resistance | Laser welding property | | Transmission Loss dB/km | Comprehensive evaluation |
| | | | | | | | Core wire color | Welding capa-bility | | |
| Ex.1 | Nylon-12(a) Without flame retardancy and adhesiveness | PP elastomer (1) With flame retardancy and adhesiveness | x | o | o | o | White | x | o | Δ |
| EX.2 | Nylon-12(b) With flame retardancy and adhesiveness | PP elastomer (1) With flame retardancy and adhesiveness | o | o | o | o | Black | o | o | o |
| EX.3 | Nylon-12(b) With flame retardancy and adhesiveness | PP elastomer (2) Without flame retardancy and adhesiveness | o | x | x | o | White | x | o | x |
| Comp EX.1 | PVC | PP elastomer With flame retardancy and adhesiveness | x | x | o | x | White | x | o | x |

| | | | | | | | | | | |
|---|---|---|---|---|---|---|---|---|---|---|
| *adhesion: between HPCF strand and first coating; pistonning: retraction and protrusion from coating layer ** adhesion: between first coating and second coating; pistonning: retraction and protrusion from coating layer | | | | | | | | | | |

As is apparent from Table 2, it was proved that Example 3 of this invention is controlled to the appropriate adhesion property, reduced in pistonning by environmental temperature changes, and achieves comprehensively good result in flame retardancy, heat resistance, laser welding property, and transmission loss.

As indicated by Examples 1 to 3 and Comparative Example 1, the first coating material and the second coating materials were combined in order to confirm the particulars.

The difference in adhesion property occurred among the combinations of the HPCF strand, the first coating material, and the second coating material.

Though it was possible to perform the coating by extrusion molding while controlling the adhesion property to the appropriate value (100 to 400 g/mm) in the adhesion to the first coating material (flame retardant nylon-12 resin), some of the samples resulted in the adhesion property of 100 g/mm or less and pistonning.

Though the adhesion property in the adhesion to the second coating material (flame retardant polypropylene-based elastomer) was controlled to the appropriate adhesion property of 100 to 300 g/mm (more preferably 150 to 250 g/mm), the adhesion property became too weak to adhere depending on the material.

Good results were obtained in outer diameter fluctuation of the optical fiber core wire obtained by the first coating extrusion processing with the outer diameters in all of the samples being controlled to 40 µm or less. With such controlled fluctuation, it is possible to enhance reliability of welding between the optical fiber core wire and a ferrule by laser irradiation.

Heat resistance was confirmed by keeping the samples into a tank at 125°C for 3,000 hours and then checking changes in appearance and loss shift. The appearances of the samples did not change, and no change was confirmed in loss shift, thereby achieving the good results:

Flame retardancy was poor when the content of the flame retarder was less than 30 wt% and was good enough to attain self-extinguish when the flame retarder content was 30 wt% or more, thereby achieving the good results.

Laser welding was performed by irradiating a part of the optical fiber core wire 1A with a laser 7 as show in Fig. 1B, whereby the transparent resin ferrule was welded to be attached to the optical fiber core wire. Such processing was not successful when the color of the optical fiber core wire was white, but the processing was successful when the color was black. A medium used for the laser was CO₂ (carbon dioxide). A degree of adhesion by the laser irradiation in this invention was substantially similar to that of the conventional adhesion method. Also, it was possible to reduce the processing time to 1/20 as compared to the conventional adhesion method.

As to the second coating material, the cord was deformed when D-scale was 52 or less in applying a force during terminal processing, so that it was impossible to attach the ferrule. When the hardness was 55 or more by D-scale, it was possible to use screw type and pressure type ferrules,

Since Comparative Example 1 was obtained by using PVC as the first coating material for reference, Comparative Example 1 did not achieve good result in adhesion property, pistonning, and heat resistance.

The HPCF type flame retardant heat resistant fiber cord and the cord obtained by attaching a plug such as an optical connector to at least one end of the cord of this invention are suitable for applications such as mobile communications for vehicles, trains, and the like, applications such as communications under severe use environments such as high temperature and low temperature environments, and applications that requires on-site terminal processing for attaching the optical connector or the like.

This invention is not limited to the above-described representative examples, and it is needless to say that the representative examples are encompassed by the scope of this invention.

## Claims

1. An HPCF type flame retardant heat resistant optical fiber core wire, comprising:
a HPCF strand including a core which is made of silica glass, and a clad which is made of a hard fluorine-based resin and formed on the core; and
a first coating layer, made of a flame retardant nylon-12 resin and provided on the clad of the HPCF strand;
wherein an adhesion property between the clad and the flame retardant nylon-12 resin is 100 to 400 g/mm.

2. The HPCF type flame retardant heat resistant optical fiber core wire according to claim 1, wherein the flame retardant nylon-12 resin comprises 5 to 20 wt% of a triadine-based flame retarder and 1 to 20 wt% of an adhesive resin.

3. The HPCF type flame retardant heat resistant optical fiber core wire according to claim 2, wherein the first coating layer comprises 0.1 wt% or more of carbon black so that the first coating layer becomes black and capable of being inserted into a plastic ferrule and enabling attachment of an optical connector by welding with a laser irradiation.

4. The HPCF type flame retardant heat resistant optical fiber core wire according to claim 3, wherein a material of the ferrule to be combined with the HPCF type flame retardant heat resistant optical fiber core wire is a transparent resin in order to achieve good welding between the HPCF type flame retardant heat resistant optical fiber core wire and the ferrule by laser irradiation.

5. An HPCF type flame retardant heat resistant optical fiber cord comprising:
the HPCF type flame retardant heat resistant fiber core wire according to claim 1 and
a second coating layer, which is made of a flame retardant polypropylene-based elastomer and provided on the HPCF type flame retardant heat resistant fiber core wire;
wherein an adhesion property between the flame retardant nylon-12 resin and the second coating layer is 100 to 300 g/mm.

6. An HPCF type flame retardant heat resistant optical fiber cord, comprising:
the HPCF type flame retardant heat resistant fiber core wire according to claim 2, and
a second coating layer, which is made of a flame retardant polypropylene-based elastomer comprising 30 to 50 wt% of a flame retarder and 1 to 10 wt% of an adhesive resin and provided on the HPCF type flame retardant heat resistant fiber core wire.

7. The HPCF type flame retardant heat resistant optical fiber cord according to claim 6, wherein the flame retardant polypropylene-based elastomer has a hardness of 55 or more by D-scale.

8. The HPCF type flame retardant heat resistant optical fiber cord according to claim 7, comprising enabling attachment of an optical connector to a screw type ferrule or an extrusion type ferrule by mechanical connection due to the optical fiber cord having the hardness of 55 or more by D-scale.
